# EUROPÄISCHE PATENTSCHRIFT

(11) **EP 1 185 807 B1**
(45) Veröffentlichungstag und Bekanntmachung des Hinweises auf die Patenterteilung: **13.08.2003**
(21) Anmeldenummer: 00943780.7
(22) Anmeldetag: 07.06.2000
(51) Int. Cl.: F16H 61/40, F16H 39/40

(54) **HYDROSTATISCHER FAHRANTRIEB**
HYDROSTATIC TRAVELING MECHANISM
SYSTEME D'ENTRAINEMENT HYDROSTATIQUE

(30) Priorität: 11.06.1999 DE 19926718; 11.04.2000 DE 10017901
(43) Veröffentlichungstag der Anmeldung: 13.03.2002
(73) Patentinhaber: Bosch Rexroth AG, 97816 Lohr am Main (DE)
(72) Erfinder: Cunningham, Sinclair, SUC Design Ltd., Kirkcaldy (GB); Perry, Graham, Edinburgh EH10 6UG (GB)
(74) Vertreter: Körfer, Thomas, Dipl.-Phys.
(86) Internationale Anmeldenummer: EP0005264
(87) Internationale Veröffentlichungsnummer: WO00077426

(56) Entgegenhaltungen:
- EP-A- 0 919 417
- FR-A- 1 110 215
- FR-A- 1 362 444
- US-A- 5 730 041
- PATENT ABSTRACTS OF JAPAN vol. 1998, no. 11, 30. September 1998 (1998-09-30) & JP 10 166883 A (HONDA MOTOR CO LTD), 23. Juni 1998 (1998-06-23) & US 6 033 040 A (INAGAKI HIROMI) 7. März 2000 (2000-03-07)

## Beschreibung

Die Erfindung betrifft einen hydrostatischen Fahrantrieb zum Antrieb von Fahrzeugen verschiedener Art.

Ein hydrostatischer Fahrantrieb ist zum Beispiel aus der EP 0 547 947 A1 bekannt. Bei dem aus dieser Druckschrift hervorgehenden hydrostatischen Fahrantrieb sind zwei an einer Fahrzeugachse gegenüberliegende Fahrzeugräder durch jeweils zwei paarweise auf einer gemeinsamen Welle angeordnete Hydromotoren angetrieben. Das von einer Hydropumpe in einem Arbeitskreislauf geförderte Hydraulikfluid verzweigt sich vor den paarweise angeordneten Hydromotoren. Während das Hydraulikfluid vom Ausgang eines der beiden paarweise angeordneten Hydromotoren unmittelbar zur Hydropumpe zurückströmt, ist der Ausgang des anderen auf der gleichen Welle angeordneten Hydromotors über jeweils einen weiteren Hydromotor mit der Hydropumpe verbunden, wobei diese weiteren Hydromotoren Fahrzeugräder einer anderen Fahrzeugachse antreiben. Bei dem aus dieser Druckschrift hervorgehenden hydrostatischen Antrieb sind keine Maßnahmen vorgesehen, um zu verhindern, daß an einem der sich gegenüberliegenden Fahrzeugräder ein Schlupf auftritt, welcher den Wirkungsgrad des Antriebs erheblich mindert.

Aus der EP 0 505 254 A1 ist ein hydrostatischer Fahrantrieb bekannt, bei welchem sämtliche verschiedene Fahrzeugräder antreibende Hydromotoren parallel mit der Hydropumpe verbunden sind. An den Abtriebsachsen der einzelnen Hydromotoren sind Drehzahlsensoren vorgesehen. In Abhängigkeit von den ermittelten Drehzahlen an den einzelnen Abtriebswellen kann die die zugeordneten Hydromotoren durchströmende Druckfluidmenge durch einstellbare, gedrosselte Verzweigeventile reguliert werden, so daß mögliche Drehzahlunterschiede ausgeglichen werden und insbesondere eine Lenkung oder ein exakter Geradeaus-Fahrbetrieb ermöglicht wird. Um einen Schlupf an einem der Fahrzeugräder auszugleichen, ist diese Anordnung jedoch nur begrenzt einsatzfähig.

Aus der EP 0 378 742 A2 ist ein hydrostatischer Fahrantrieb bekannt, bei welchem ein erster und ein zweiter Antriebsstrang beim Kurvenfahrbetrieb vollständig voneinander getrennt sind, wobei der erste Antriebsstrang eine erste Hydropumpe und einen ersten Hydromotor und der zweite Antriebsstrang eine zweite Hydropumpe und einen zweiten Hydromotor aufweist. Um einen möglichst exakten Geradeaus-Fahrbetrieb zu ermöglichen, sind die Hydromotoren bei der Geradeausfahrt mittels einer mechanischen Kupplung einerseits mechanisch miteinander verbindbar. Andererseits sind die getrennten hydraulischen Arbeitskreisläufe beim Geradeaus-Fahrbetrieb durch Ventile miteinander hydraulisch verbunden. Eine Maßnahme zur Verhinderung des Schlupfes an einem der beiden Antriebsstränge geht aus dieser Druckschrift nicht hervor.

Aus der DE-OS 20 26 910 ist es bekannt, eine erste Hydropumpe, einen ersten Hydromotor, eine zweite Hydropumpe und einen zweiten Hydromotor in einem gemeinsamen Arbeitskreislauf seriell anzuordnen. Bei diesem Antrieb wird zwar aufgrund der hydraulischen starren Kopplung zwischen den beiden Hydromotoren ein Schlupf weitgehend vermieden. Jedoch ist der Wirkungsgrad dieser Antriebsart aufgrund der seriellen Anordnung der beiden Hydromotoren wesentlich vermindert.

Aus der FR 1362444 A ist ein hydrostatischer Fahrantrieb nach dem Oberbegriff des Anspruchs 1 bekannt, bei welchem bei Auftreten von Schlupf der hydraulischen Arbeitskreis zum ersten oder zweiten Hydromotor mittels einer Ventilanordnung unterbrochen wird.

Der Erfindung liegt die Aufgabe zugrunde, einen vereinfachten hydrostatischen Fahrantrieb zum Antrieb von mehreren Antriebssträngen zu schaffen, wobei ein Schlupf an einem der Antriebsstränge ohne wesentliche Beeinträchtigung des Wirkungsgrads verhindert wird.

Die Aufgabe wird durch die kennzeichnenden Merkmale des Anspruchs 1 in Verbindung mit den gattungsbildenden Merkmalen gelöst.

Der Erfindung liegt die Erkenntnis zugrunde, daß es vorteilhaft ist, an jedem Antriebsstrang zwei mechanisch miteinander gekoppelte Hydromotoren vorzusehen, wobei jeweils einer der Hydromotoren in einem Arbeitskreislauf angeordnet ist und dem unmittelbaren Antrieb des zugeordneten Antriebsstrangs dient, während die beiden anderen Hydromotoren über einen Nebenkreislauf hydraulisch miteinander verbunden sind. Tritt an dem ersten Antriebsstrang ein Schlupf auf, so arbeitet der zugehörige, in dem Nebenkreis angeordnete Hydromotor als Pumpe und erzeugt in dem Nebenkreislauf einen Bremsdruck. Da die Drehzahl des in dem Nebenkreislauf angeordneten Hydromotors des zweiten Antriebsstrangs begrenzt ist, vermindert der in dem Nebenkreislauf aufgebaute Bremsdruck die Drehzahl an dem ersten Antriebsstrang. Auf diese Weise wird vermieden, daß der an dem ersten Antriebsstrang auftretende Schlupf ein unverhältnismäßig große Druckfluidmenge in dem Arbeitskreislauf beansprucht. Die hydraulische Leistung des Arbeitskreislaufes kann deshalb an dem nicht mit einem Schlupf behafteten zweiten Antriebsstrang unvermindert angreifen.

In den Unteransprüchen sind vorteilhafte Weiterbildungen der Erfindung angegeben.

Vorteilhaft sind in dem Nebenkreislauf Schaltventile so angeordnet, daß zwei der paarweise an den Antriebssträngen angeordnete Hydromotoren nur dann in dem Nebenkreislauf in der vorstehend beschriebenen Weise miteinander hydraulisch verschaltet werden, wenn tatsächlich ein Schlupf auftritt. Solange kein Schlupf auftritt, werden diese Hydromotoren dagegen über die Schaltventile dem Arbeitskreislauf zugeschaltet, so daß sich das abgetriebene Drehmoment erhöht. Die Schaltventile können beispielsweise elektrisch über eine Steuereinheit angesteuert werden, die einen auftretenden Schlupf beispielsweise durch einen Vergleich der mittels Drehzahlsensoren erfaßten Drehzahlen der Antriebsstränge oder durch Detektion eines Druckabfalls an den in dem Arbeitskreislauf befindlichen Hydromotoren ermittelt.

Die Einspeisung von Druckfluid in den Nebenkreislauf kann über den unmittelbaren Anschluß an eine Speiseleitung über entsprechende Rückschlagventile erfolgen. Alternativ dazu ist es möglich, den Niederdruck des Arbeitskreislaufs als Einspeisedruck für den Nebenkreislauf zu nutzen. Die Einspeisung erfolgt dann zweckmäßigerweise über ein geeignetes Schaltventil für den Druckwechsel.

Die Erfindung eignet sich auch für drei, vier oder mehr Antriebsstränge. Dabei verfügt jeder Antriebsstrang über zwei Hydromotoren, wobei jeweils ein Hydromotor mit dem Arbeitskreislauf und ein anderer mit dem Nebenkreislauf verbunden ist. Es können auch mehrere Nebenkreisläufe vorgesehen sein. Die Leitungen des Nebenkreislaufs können über eine Drossel verbunden sein, wodurch ein begrenzter Schlupf zwischen den Antriebssträngen zugelassen wird und somit die Steuerung des Fahrzeugs erleichtert wird.

Die Erfindung wird nachfolgend unter Bezugnahme auf die Zeichnung näher beschrieben. In der Zeichnung zeigen:
- Fig. 1: ein hydraulisches Prinzipschaltbild eines ersten Ausführungsbeispiels der Erfindung;
- Fig. 2: ein hydraulisches Prinzipschaltbild eines zweiten Ausführungsbeispiels der Erfindung;
- Fig. 3: ein hydraulisches und elektrisches Prinzipschaltbild eines dritten Ausführungsbeispiels der Erfindung;
- Fig. 4: ein hydraulisches Prinzipschaltbild eines vierten Ausführungsbeispiels der Erfindung;
- Fig. 5: ein hydraulisches Prinzipschaltbild eines fünften Ausführungsbeispiels der Erfindung; und
- Fig. 6: ein hydraulisches Prinzipschaltbild eines sechsten Ausführungsbeispiels der Erfindung.

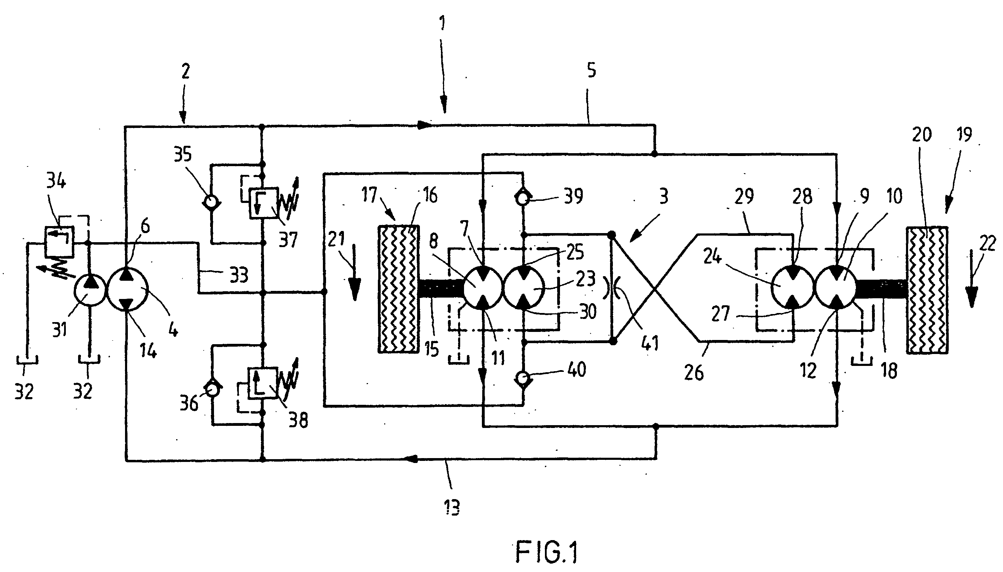

Fig. 1 zeigt ein hydraulisches Prinzipschaltbild eines ersten Ausführungsbeispiels der Erfindung. Der erfindungsgemäße hydrostatische Fahrantrieb 1 besteht aus einem Arbeitskreislauf 2 und einem Nebenkreislauf 3. In dem Arbeitskreislauf 2 ist eine vorzugsweise verstellbare und reversierbare Hydropumpe 4 angeordnet. Ein erster Anschluß 6 der Hydropumpe 4 ist über eine erste Arbeitsleitung 5 mit einem ersten Anschluß 7 eines ersten Hydromotors 8 verbunden. Ferner ist der erste Anschluß 6 der Hydropumpe über die erste Arbeitsleitung 5 mit einem ersten Anschluß 9 eines zweiten Hydromotors 10 verbunden. Ein zweiter Anschluß 11 des ersten Hydromotors 8 sowie ein zweiter Anschluß 12 des zweiten Hydromotors 10 sind über eine zweite Arbeitsleitung 13 mit einem zweiten Anschluß 14 der Hydropumpe 4 verbunden.

Der erste Hydromotor 8 ist über eine erste Abtriebswelle 15 mit einem ersten Antriebsstrang 17 verbunden, der im dargestellten Ausführungsbeispiel ein erstes Fahrzeugrad 16 umfaßt. Die zweite Hydropumpe 10 ist über eine zweite Abtriebswelle 18 mit einem zweiten Antriebsstrang 19 verbunden, der im dargestellten Ausführungsbeispiel ein zweites Fahrzeugrad 20 umfaßt. Die Fahrzeugräder 16 und 20 sind im Ausführungsbeispiel gegenüberliegende Fahrzeugräder einer gemeinsamen Fahrzeugachse. Die Pfeile 21 und 22 verdeutlichen die Drehrichtung der Fahrzeugräder 16 und 20. Die Hydromotoren 8 und 10 müssen nicht notwendigerweise gegenüberliegende Fahrzeugräder einer gemeinsamen Fahrzeugachse antreiben. So können die Antriebsstränge 17 und 19 beispielsweise auch zum Antrieb zweier Ketten eines Kettenfahrzeugs dienen.

Ein dritter Hydromotor 23 ist mit dem ersten Antriebsstrang 17 mechanisch gekoppelt. Dagegen ist ein vierter Hydromotor 24 mit dem zweiten Antriebsstrang 19 mechanisch gekoppelt. Vorzugsweise sind der erste Hydromotor 8 und der dritte Hydromotor 23 an der gemeinsamen Abtriebswelle 15 als Doppel-Hydromotoren angeordnet. In gleicher Weise sind vorzugsweise der zweite Hydromotor 10 und der vierte Hydromotor 24 an der gemeinsamen zweiten Abtriebswelle 18 als Doppel-Hydromotoren angeordnet.

Der dritte Hydromotor 23 und der vierte Hydromotor 24 sind durch den Nebenkreislauf 3 hydraulisch miteinander so verschaltet, daß ein erster Anschluß 25 des dritten Hydromotors 23 über eine erste Nebenleitung 26 mit einem ersten Anschluß 27 des vierten Hydromotors 24 verbunden ist und ein zweiter Anschluß 28 des vierten Hydromotors 24 über eine zweite Nebenleitung 29 mit einem zweiten Anschluß 30 des dritten Hydromotors 23 verbunden ist. Der Nebenkreislauf 3 ist somit als geschlossener, von dem Arbeitskreislauf 1 unabhängiger Hydraulikkreislauf ausgebildet.

Zur Einspeisung von Hydraulikfluid sowohl in den Arbeitskreislauf 1 als auch in den Nebenkreislauf 3 dient eine mit der Hydropumpe 4 gekoppelte Speisepumpe 31, die Druckfluid aus einem Tank 32 ansaugt und in eine Speiseleitung 33 einspeist. Zur Druckbegrenzung in der Speiseleitung 33 dient ein Druckbegrenzungsventil 34, das die Speiseleitung 33 mit dem Tank 32 verbindet.

Die Speiseleitung 33 ist über ein erstes Rückschlagventil 35 mit der ersten Arbeitsleitung 5 und über ein zweites Rückschlagventil 36 mit der zweiten Arbeitsleitung 13 verbunden. Somit wird das Druckfluid jeweils in diejenige Arbeitsleitung 5 bzw. 13 eingespeist, die gerade Niederdruck führt. Parallel zu den Rückschlagventilen 35 und 36 sind Druckbegrenzungsventile 37 und 38 angeordnet, um den Druck in der jeweils Hochdruck führenden Arbeitsleitung 5 bzw. 13 zu begrenzen.

Die erste Nebenleitung 26 ist über ein drittes Rückschlagventil 39 mit der Speiseleitung 33 verbunden, während die zweite Nebenleitung 29 über ein viertes Rückschlagventil 40 mit der Speiseleitung 33 verbunden ist. Dadurch wird Hydraulikfluid in die jeweils Niederdruck führende Nebenleitung 26 bzw. 29 des Nebenkreislaufs 3 eingespeist.

Die Funktion des erfindungsgemäßen hydrostatischen Fahrantriebs 1 ist folgendermaßen:

Wenn weder der Antriebsstrang 17 noch der Antriebsstrang 19 einem Schlupf unterworfen ist, erhalten der erste Hydromotor 8 und der zweite Hydromotor 10 im wesentlichen die gleiche Druckfluidmenge, so daß sich die Fahrzeugräder 16 und 20 der beiden Antriebsstränge 17 und 19 im wesentlichen mit gleicher Drehzahl drehen. Folglich drehen sich auch der dritte Hydromotor 23 und der vierte Hydromotor 24 mit im wesentlichen gleicher Drehzahl, so daß sich in dem Nebenkreis 3 kein Bremsdruck aufbaut.

Ist jedoch beispielsweise der erste Antriebsstrang 17 einem Schlupf unterworfen, indem das Fahrzeugrad 16 auf einem schlecht griffigen Untergrund durchrutscht, so würde sich ohne die erfindungsgemäße Maßnahme die Drehzahl des. Fahrzeugrads 16 erheblich erhöhen, da dem Fahrzeugrad 16 kein Widerstand entgegengesetzt ist. Die erhöhte Drehzahl würde die dem Hydromotor 8 zufließende Druckfluidmenge erhöhen, so daß das Druckfluid im wesentlichen über den ersten Hydromotor 8 und nur noch im weitaus geringeren Umfang über den zweiten Hydromotor 10 strömt und somit der Antrieb über den zweiten Antriebsstrang 19 wenig effektiv wäre.

Die Antriebsstränge 17 und 19 sind jedoch erfindungsgemäß durch den dritten Hydromotor 23 und den vierten Hydromotor 24 über den Nebenkreislauf 3 hydraulisch miteinander verbunden. Die Erhöhung der Drehzahl an der ersten Abtriebswelle 15 führt zu einer Zunahme der Drehzahl des dritten Hydromotors 23, der als Pumpe arbeitet und je nach Drehrichtung des Fahrzeugrads 16 entweder in der ersten Nebenleitung 26 oder der zweiten Nebenleitung 29 einen Bremsdruck aufbaut. Da die Drehzahl des vierten Hydromotors 24 und damit die durch diesen Hydromotor 24 fließende Druckfluidmenge durch die Drehzahl des sich im festen Eingriff mit dem Untergrund befindlichen Fahrzeugrades 20 vorgegeben ist, wird der vierte Hydromotor 24 durch den Bremsdruck nicht beschleunigt, sondern die Drehzahl des dritten Hydromotors 23 und somit die Drehzahl der ersten Abtriebswelle 15 paßt sich der Drehzahl der zweiten Abtriebswelle 18 an. Deshalb bleibt eine im wesentlichen gleichmäßige Aufteilung des in dem Arbeitskreislauf 2 fließenden Volumenstroms auf den ersten Hydromotor 8 und den zweiten Hydromotor 10 erhalten und der Antrieb über den zweiten Abtriebsstrang 19 bleibt wirksam.

Die erste Nebenleitung 26 und die zweite Nebenleitung 29 des Nebenkreislaufs 3 können über eine Drossel 41 miteinander verbunden sein. Die Drossel 41 ermöglicht eine gedrosselte Querströmung zwischen der ersten Nebenleitung 26 und der zweiten Nebenleitung 29 und somit einen geringfügigen, begrenzten Schlupf zwischen den Fahrzeugrädern 16 und 20. Dadurch wird die Steuerung des Fahrzeugs ermöglicht bzw. erleichtert.

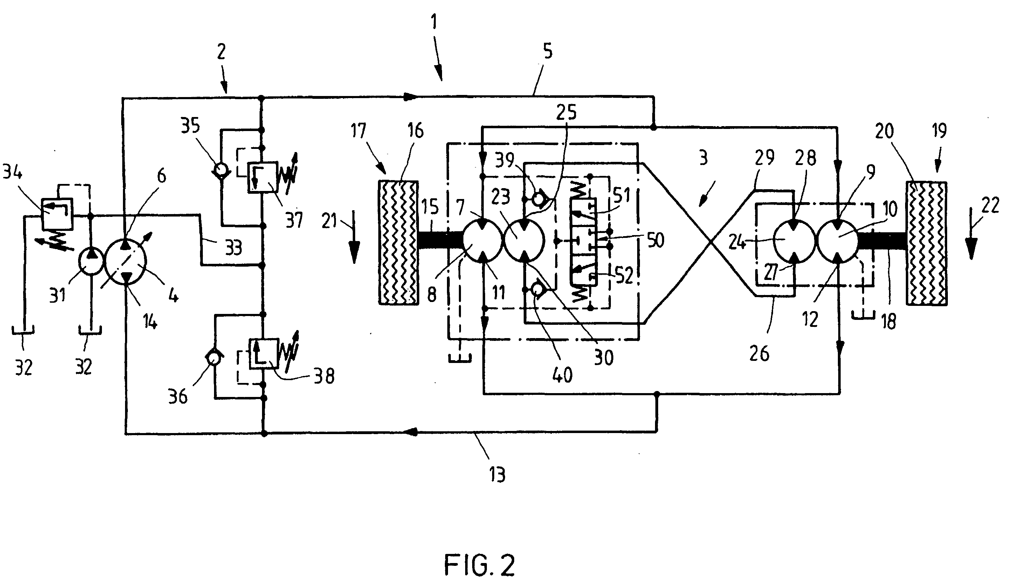

Fig. 2 zeigt ein zweites Ausführungsbeispiel des erfindungsgemäßeh hydrostatischen Fahrantriebs 1. In sämtlichen Figuren der Zeichnung sind identische bzw. sich entsprechende Elemente mit übereinstimmenden Bezugszeichen versehen, so daß sich diesbezüglich eine wiederholende Beschreibung erübrigt.

Der Unterschied zu dem bereits anhand von Fig. 1 beschriebenen Ausführungsbeispiel besteht bei dem in Fig. 2 dargestellten Ausführungsbeispiel darin, daß die Rückschlagventile 39 und 40 für die Einspeisung des Hydraulikfluids in die jeweils Niederdruck führende Nebenleitung 26 bzw. 29 über ein druckgesteuertes 3/3-Wege-Schaltventil 50 mit der jeweils Niederdruck führenden Arbeitsleitung 5 bzw. 13 verbunden sind. Das Ventil 50 steht sowohl mit der ersten Arbeitsleitung 5 als auch mit der zweiten Arbeitsleitung 13 in Verbindung und vergleicht die in den Arbeitsleitungen 5 und 13 herrschenden Drücke miteinander. Steht in der Arbeitsleitung 5 Hochdruck und in der Arbeitsleitung 13 Niederdruck an, so nimmt das Ventil 50 die Ventilstellung 51 ein, so daß die Niederdruck führende Arbeitsleitung 13 über das Ventil 50 und eines der beiden Rückschlagventile 39 oder 40 mit dem Nebenkreislauf 3 verbunden ist. Wenn umgekehrt in der zweiten Arbeitsleitung 13 Hochdruck und in der ersten Arbeitsleitung 5 Niederdruck ansteht, so nimmt das Ventil 50 die Ventilstellung 52 ein, so daß die Niederdruck führende erste Arbeitsleitung 5 über das Ventil 50 und eines der beiden Rückschlagventile 39 oder 40 mit dem Nebenkreislauf 3 verbunden ist. Eine direkte Verbindung mit der Speiseleitung 33 ist bei dieser Ausführungsform nicht erforderlich.

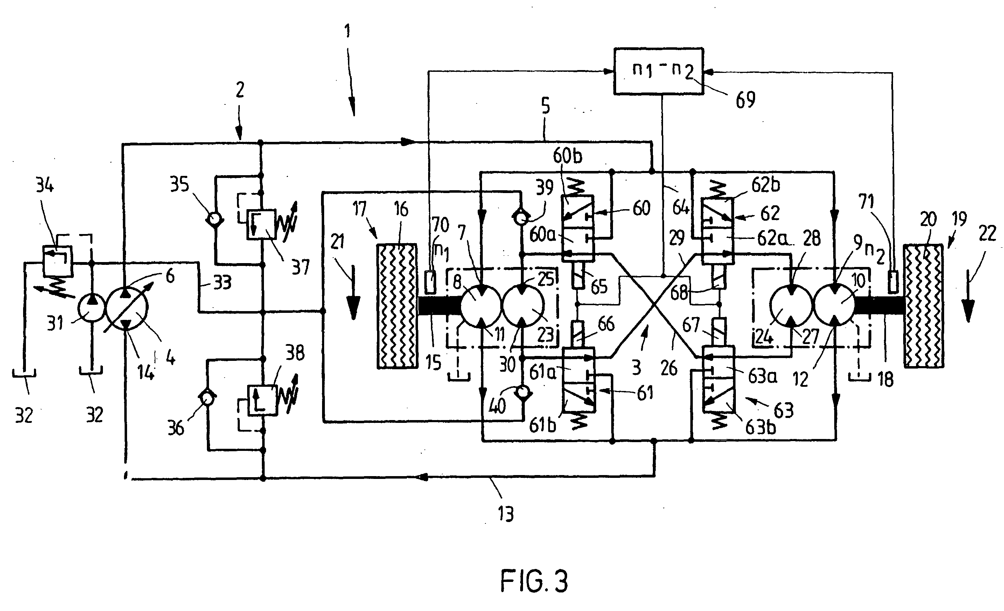

Fig. 3 zeigt ein drittes Ausführungsbeispiel eines erfindungsgemäßen hydrostatischen Fahrantriebs.

Im Unterschied zu dem bereits anhand von Fig. 1 beschriebenen Ausführungsbeispiel sind bei dem in Fig. 3 dargestellten Ausführungsbeispiel in der ersten Nebenleitung 26 des Nebenkreislaufs 3 ein erstes 3/2-Wege-Schaltventil 60 und ein viertes 3/2-Wege-Schaltventil 63 vorgesehen, während in der zweiten Nebenleitung 29 des Nebenkreislaufs 3 ein zweites 3/2-Wege-Schaltventil 61 und ein drittes 3/2-Wege-Schaltventil 62 vorgesehen sind.

Wenn sich die Ventile 60 bis 63 in ihrer in Fig. 3 dargestellten ersten Ventilstellung 60a, 61a, 62a bzw. 63a befinden, ist der Nebenkreislauf 3 geschlossen. Der Nebenkreislauf 3 arbeitet wie anhand von Fig. 1 beschrieben, um einem Schlupf an einem der beiden Antriebsstränge 17 bzw. 19 entgegenzuwirken. Wenn sich die Ventile 60 bis 63 jedoch in ihrer jeweils anderen Schaltstellung 60b, 61b, 62b bzw. 63b befinden, so ist der erste Anschluß 25 des dritten Hydromotors 23 mit der ersten Arbeitsleitung 5 und der zweite Ahschluß 30 des dritten Hydromotors 23 mit der zweiten Arbeitsleitung 13 verbunden. Entsprechend ist der erste Anschluß 27 des vierten Hydromotors 24 dann mit der zweiten Arbeitsleitung 13 und der zweite Anschluß 28 des vierten Hydromotors 24 mit der ersten Arbeitsleitung 5 verbunden. Die Ventile 60 bis 63 befinden sich in der Schaltstellung 60b bis 63b, solange kein Schlupf an den Antriebssträngen 17 und 19 auftritt. Dies hat den Vorteil, daß für den ersten Antriebsstrang 17 sowohl der erste Hydromotor 8 als auch der dritte Hydromotor 23 und für den zweiten Antriebsstrang 19 sowohl der zweite Hydromotor 10 als auch der vierte Hydromotor 24 zur Verfügung stehen und somit das erzeugbare Drehmoment relativ groß ist. Wenn an einem der beiden Antriebsstränge 17 bzw. 19 ein Schlupf auftritt, so werden die Ventile 60 bis 63 durch ein geeignetes Steuersignal umgeschaltet.

Die Ventile 60 bis 63 werden in dem in Fig. 3 dargestellten Ausführungsbeispiel über ein elektrisches Steuersignal angesteuert, das über eine elektrische Steuerleitung 64 Elektromagneten 65 bis 68 zugeführt wird. Das elektrische Steuersignal wird von einer Steuereinrichtung 69 erzeugt, die mit zwei Drehzahlsensoren 70 und 71 verbunden ist. Der erste Drehzahlsensor 70 ermittelt die Drehzahl n₁ der ersten Abtriebswelle 15. Entsprechend ermittelt der zweite Drehzahlsensor 71 die Drehzahl n₂ der zweiten Abtriebswelle 19. Überschreitet die Differenz n₁-n₂ der Drehzahlen n₁ und n₂ einen vorgegebenen Schwellwert, so deutet dies auf einen Schlupf an einem der beiden Antriebsstränge 17 bzw. 19 hin. Die Ventile 60 bis 63 werden dann von der Steuereinrichtung 69 entsprechend umgeschaltet.

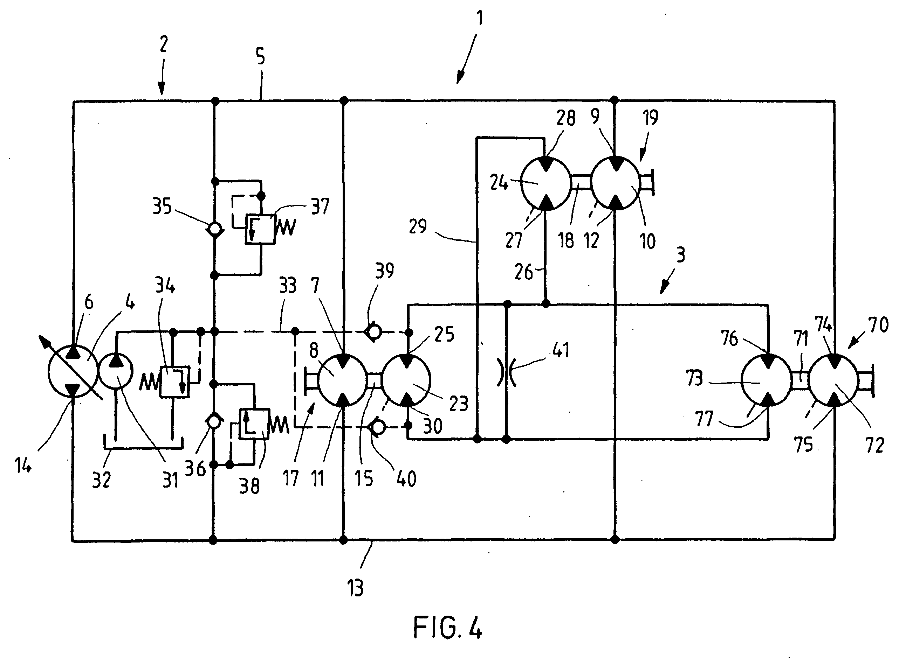

Fig. 4 zeigt ein viertes Ausführungsbeispiel eines erfindungsgemäßen hydrostatischen Fahrantriebs 1, wobei neben dem ersten Antriebsstrang 17 und dem zweiten Antriebsstrang 19 ein dritter Antriebsstrang 70 vorgesehen ist. Die drei Antriebsstränge 17, 19 und 70 dienen beispielsweise zum Antrieb von drei unterschiedlichen Fahrzeugrädern, die in Fig. 4 nicht dargestellt sind. An einer Abtriebswelle 71 befindet sich ein fünfter Hydromotor 72 und ein sechster Hydromotor 73. Ein erster Anschluß 74 des fünften Hydromotors 72 ist über die erste Arbeitsleitung 5 mit dem ersten Anschluß 6 der Hydropumpe 4 verbunden. Hingegen ist ein zweiter Anschluß 75 des fünften Hydromotors 72 mit dem zweiten Anschluß 14 der Hydropumpe 4 verbunden. Der erste Hydromotor 8, der zweite Hydromotor 10 und der fünfte Hydromotor 72 sind also in dem Arbeitskreislauf 2 parallel geschaltet.

Hingegen ist der sechste Hydromotor 73 über den Nebenkreislauf 3 mit dem dritten Hydromotor 23 und dem vierten Hydromotor 24 verbunden. Hierzu steht ein erster Anschluß 76 des sechsten Hydromotors 73 über die erste Nebenleitung 26 des Nebenkreislaufs 3 mit dem ersten Anschluß 25 des dritten Hydromotors 23 und dem ersten Anschluß 27 des vierten Hydromotors 24 in Verbindung. Hingegen steht ein zweiter Anschluß 77 des sechsten Hydromotors 73 über die Nebenleitung 29 des Nebenkreislaufs 3 mit dem zweiten Anschluß 30 des dritten Hydromotors 23 und dem zweiten Anschluß 27 des vierten Hydromotors 24 in Verbindung. Die Hydromotoren 23, 24 und 73 sind deshalb über den Nebenkreislauf 3 miteinander gekoppelt und verhindern in der bereits beschriebenen Funktionsweise einen Schlupf an den über die Antriebsstränge 17, 19 und 70 angetriebenen Fahrzeugrädern.

Bei diesem Ausführungsbeispiel muß je nach Drehrichtung der Hydromotoren 23, 24 und 73 einer der Hydromotoren 23, 24 oder 73 so ausgelegt sein, daß dessen Schluckvolumen so groß wie die Summe der Schluckvolumina der beiden anderen Hydromotoren ist. Im in Fig. 4 dargestellten Ausführungsbeispiel hat beispielsweise der vierte Hydromotor 24 ein doppelt so großes Schluckvolumen wie jeweils der dritte Hydromotor 23 und der sechste Hydromotor 73.

Im in Fig. 4 dargestellten Ausführungsbeispiel ist wiederum eine Drossel 41 vorgesehen, die eine geringfügige Querströmung zwischen der ersten Nebenleitung 26 und der zweiten Nebenleitung 29 ermöglicht, so daß die Steuerung des Fahrzeugs erleichtert wird. Die Drossel 41 kann jedoch auch entfallen, wenn eine besonders starre Kopplung der Antriebsstränge 17, 19 und 70 gewünscht ist.

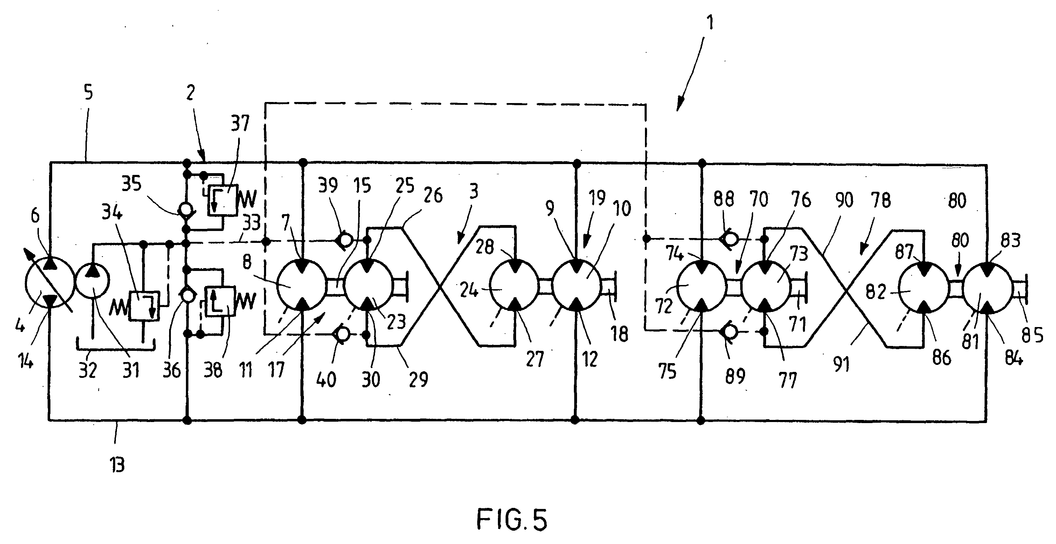

Fig. 5 zeigt ein Ausführungsbeispiel eines erfindungsgemäßen hydrostatischen Fahrantriebs 1 zum Antrieb von vier Antriebssträngen 17, 19, 70 und 80. Die einzelnen Antriebsstränge 17, 19, 70 und 80 treiben beispielsweise unterschiedliche Fahrzeugräder an. Der erste Antriebsstrang 17 verfügt über den ersten Hydromotor 8 und den dritten Hydromotor 23, während der zweite Antriebsstrang 19 über den zweiten Hydromotor 10 und den vierten Hydromotor 24 verfügt. Während der erste Hydromotor 8 und der zweite Hydromotor 10 in gleicher Weise, wie in Fig. 1 dargestellt, mit dem Arbeitskreislauf 2 verbunden sind, sind der dritte Hydromotor 23 und der vierte Hydromotor 24 in gleicher Weise, wie in Fig. 1 dargestellt über einen ersten hydraulischen Nebenkreislauf 3 kreuzweise miteinander verbunden. In entsprechender Weise verfügt der dritte Antriebsstrang 70 über einen mit dem Arbeitskreislauf 2 verbundenen fünften Hydromotor 72 und einen in einem zweiten Nebenkreislauf 78 angeordneten sechsten Hydromotor 73. Ein erster Anschluß 74 des fünften Hydromotors 72 ist dabei über die erste Arbeitsleitung 5 mit dem ersten Anschluß 6 der Hydropumpe 4 verbunden, während ein zweiter Anschluß 75 des fünften Hydromotors 72 über die zweite Arbeitsleitung 13 mit dem zweiten Anschluß 14 der Hydropumpe 4 verbunden ist.

Der vierte Antriebsstrang 80 verfügt über einen in dem Arbeitskreislauf 2 angeordneten siebten Hydromotor 81 und einen in dem zweiten Nebenkreislauf 78 angeordneten achten Hydromotor 82. Dabei ist ein erster Anschluß 83 des siebten Hydromotors 81 über die erste Arbeitsleitung 5 mit dem ersten Anschluß 6 der Hydropumpe 4 verbunden, während ein zweiter Anschluß 84 des siebten Hydromotors 81 über die zweite Arbeitsleitung 13 mit dem zweiten Anschluß 14 der Hydropumpe 4 in Verbindung steht. Der siebte Hydromotor 81 treibt dabei eine Abtriebswelle 85 an.

Die Verbindung des sechsten Hydromotors 73 mit dem achten Hydromotor 82 erfolgt entsprechend zu der Verbindung des dritten Hydromotor 23 zu dem vierten Hydromotor 24, d. h. ein erster Anschluß 76 des sechsten Hydromotors 73 ist mit einem ersten Anschluß 86 des achten Hydromotors 82 verbunden, während ein zweiter Anschluß 87 des achten Hydromotors 82 mit einem zweiten Anschluß 77 des sechsten Hydromotors 73 in Verbindung steht. Bei gleicher Laufrichtung der Hydromotoren 23 und 24 einerseits und 73 und 82 andererseits erfolgt die Verschaltung der Anschlüsse dieser Hydromotoren jeweils über Kreuz.

Bei dem in Fig. 5 dargestellten Ausführungsbeispiel ist der erste Nebenkreislauf 3 vollständig von dem zweiten Nebenkreislauf 78 getrennt. Der erste Antriebsstrang 17 und der zweite Antriebsstrang 19 können beispielsweise die Fahrzeugräder einer ersten Fahrzeugachse antreiben, während der dritte Antriebsstrang 70 und der vierte Antriebsstrang 80 die Fahrzeugräder einer zweiten Fahrzeugachse antreiben. In jedem der Nebenkreise 3 und 78 kann eine in Fig. 1 dargestellte Drossel 41 vorgesehen sein, um einen geringfügigen Schlupf zur Erleichterung der Steuerung des Fahrzeugs zuzulassen.

Die Einspeisung des Druckfluids aus der Speiseleitung 33 in den Nebenkreislauf 78 erfolgt über zwei Rückschlagventile 88 und 89.

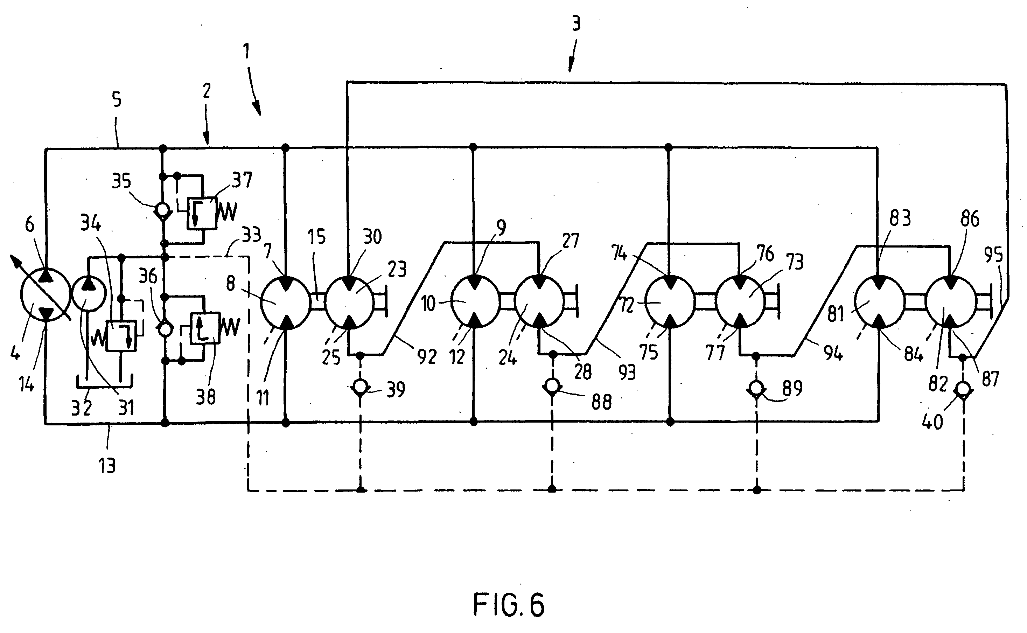

Fig. 6 zeigt ein anderes Ausführungsbeispiel eines erfindungsggemäßen hydrostatischen Fahrantriebs 1 zum Antrieb von vier Antriebssträngen 17, 19, 70 und 80. Bereits anhand von Fig. 5 beschriebene Elemente wurden mit übereinstimmenden Bezugszeichen versehen, so daß sich insoweit eine wiederholende Beschreibung erübrigt.

Im Gegensatz zu dem in Fig. 5 dargestellten Ausführungsbeispiel, sind in dem in Fig. 6 dargestellten Ausführungsbeispiel der dritte Hydromotor 23, der vierte Hydromotor 24, der sechste Hydromotor 73 und der achte Hydromotor 82 nicht in zwei getrennten Nebenkreisläufen paarweise seriell, sondern in einem einzigen Nebenkreislauf 3 insgesamt seriell angeordnet. Dazu ist der erste Anschluß 25 des dritten Hydromotors 23 über eine erste Nebenleitung 92 mit dem ersten Anschluß 27 des vierten Hydromotors 24, der zweite Anschluß 28 des vierten Hydromotors 24 über eine zweite Nebenleitung 93 mit dem ersten Anschluß 76 des sechsten Hydromotors 73, der zweite Anschluß 77 des sechsten Hydromotors 73 über eine dritte Nebenleitung 94 mit dem ersten Anschluß 86 des achten Hydromotors 82 und der zweite Anschluß 87 des achten Hydromotors 82 über eine vierte Nebenleitung 95 mit dem zweiten Anschluß 30 des dritten Hydromotors 23 verbunden.

Zur Einspeisung von Druckfluid steht die erste Nebenleitung 92 über ein Rückschlagventil 39, die zweite Nebenleitung 93 über ein Rückschlagventil 88, die dritte Nebenleitung 94 über ein Rückschlagventil 89 und die vierte Nebenleitung 95 über ein Rückschlagventil 40 mit der Speiseleitung 33 in Verbindung.

Während das in Fig. 5 dargestellte Ausführungsbeispiel nur einen Schlupf von paarweise, beispielsweise auf einer gemeinsamen Fahrzeugachse, angeordneten Fahrzeugrädern verhindert, wird bei dem in Fig. 6 dargestellten Ausführungsbeispiel ein Schlupf sämtlicher Fahrzeugräder in der Art eines Vierradantriebs vermieden. Es kann vorteilhaft sein, ein in der Zeichnung nicht dargestelltes Schaltventil vorzusehen, um zwischen der in Fig. 5 dargestellten Schaltungskonfiguration und in der in Fig. 6 dargestellten Schaltungskonfiguration umschalten zu können.

Die Erfindung ist nicht auf die dargestellten Ausführungsbeispiele beschränkt. Die Ventile 60 bis 63 können anstatt elektrisch auch hydraulisch angesteuert werden. Als Meßgröße zum Erfassen eines Schlupfes an einem der beiden Antriebsstränge 17 und 19 kann auch der Druckabfall an dem ersten Hydromotor 8 bzw. dem zweiten Hydromotor 10 herangezogen werden. Ein zu geringer Druckabfall deutet auf eine überhöhte Drehzahl des Hydromotors 8 bzw. 10 und somit auf einen Schlupf an dem jeweiligen Antriebsstrang 17 bzw. 19 hin.

## Patentansprüche

1. Hydrostatischer Fahrantrieb (1) mit
zumindest einer Hydropumpe (4),
einem mit der Hydropumpe (4) über einen hydraulischen Arbeitskreislauf (2) verbundenen ersten Hydromotor (8), der einen ersten Antriebsstrang (17) antreibt,
einem über den hydraulischen Arbeitskreislauf (2) mit der Hydropumpe (4) verbundenen zweiten Hydromotor (10), der einen zweiten Antriebsstrang (19) antreibt,
einem mit dem ersten Antriebsstrang (17) gekoppelten dritten Hydromotor (23) und
einem mit dem zweiten Antriebsstrang (19) gekoppelten vierten Hydromotor (24), wobei der vierte Hydromotor (24) mit dem dritten Hydromotor (23) über einen von dem Arbeitskreislauf (2) unabhängigen, hydraulischen Nebenkreislauf (3) verbindbar ist, und
zumindest wenn ein Schlupf an einem der Antriebsstränge (17, 19) auftritt, der dritte Hydromotor (23) und der vierte Hydromotor (24) in dem Nebenkreislauf (3) seriell angeordnet sind, **dadurch gekennzeichnet,**
**daß**, auch wenn ein Schlupf an einem der Antriebsstränge (17, 19) auftritt, ein erster Anschluß (7) des ersten Hydromotors (8) und ein erster Anschluß (9) des zweiten Hydromotors (10) über eine erste Arbeitsleitung (5) des Arbeitskreislaufs (2) mit einem ersten Anschluß (6) der Hydropumpe (4) verbunden sind und ein zweiter Anschluß (11) des ersten Hydromotors (8) und ein zweiter Anschluß (12) des zweiten Hydromotors (10) über eine zweite Arbeitsleitung (13) des Arbeitskreislaufs (2) mit einem zweiten Anschluß (14) der Hydropumpe (6) verbunden sind.

2. Hydrostatischer Fahrantrieb nach Anspruch 1
**dadurch gekennzeichnet,**
**daß** ein erster Anschluß (25) des dritten Hydromotors (23) über eine erste Nebenleitung (26) des Nebenkreislaufs (3) mit dem ersten Anschluß (27) des vierten Hydromotors (24) verbunden ist, und
**daß** ein zweiter Anschluß (28) des vierten Hydromotors (24) über eine zweite Nebenleitung (26) des Nebenkreislaufs (3) mit einem zweiten Anschluß (30) des dritten Hydromotors (23) verbunden ist.

3. Hydrostatischer Fahrantrieb nach Anspruch 1,
**dadurch gekennzeichnet,**
**daß** eine Ventilanordnung (60, 61) vorgesehen ist, über die ein erster Anschluß (25) des dritten Hydromotors (23) wahlweise mit einem ersten Anschluß (27) des vierten Hydromotors (24) oder mit einer ersten Arbeitsleitung (5) des Arbeitskreislaufs (2) und ein zweiter Anschluß (30) des dritten Hydromotors (23) wahlweise mit einem zweiten Anschluß (28) des vierten Hydromotors (24) oder mit einer zweiten Arbeitsleitung (13) des Arbeitskreislaufs (2) verbindbar sind.

4. Hydrostatischer Fahrantrieb nach Anspruch 1 oder 3,
**dadurch gekennzeichnet,**
**daß** eine Ventilanordnung (62, 63) vorgesehen ist, über die der zweite Anschluß (28) des vierten Hydromotors (24) wahlweise mit dem zweiten Anschluß (30) des dritten Hydromotors (23) oder mit der ersten Arbeitsleitung (5) und
der erste Anschluß (27) des vierten Hydromotors (24) wahlweise mit dem ersten Anschluß (25) des dritten Hydromotors (23) oder mit der zweiten Arbeitsleitung (13) verbindbar sind.

5. Hydrostatischer Fahrantrieb nach Anspruch 3 oder 4,
**dadurch gekennzeichnet,**
**daß** zumindest eine Ventilanordnung (60, 61; 62, 63) durch ein Steuersignal umschaltbar ist, welches in Abhängigkeit davon erzeugt wird, ob an einem der Antriebsstränge (17, 19) ein Schlupf auftritt.

6. Hydrostatischer Fahrantrieb nach Anspruch 5,
**dadurch gekennzeichnet,**
**daß** an dem ersten Antriebsstrang (17) ein erster Drehzahlsensor (70) und an dem zweiten Antriebsstrang (19) ein zweiter Drehzahlsensor (71) angeordnet sind, und
**daß** eine Steuereinrichtung (69) vorgesehen ist, die die von den Drehzahlsensoren (70, 71) ermittelten Drehzahlen (n₁, n₂) miteinander vergleicht, und in Abhängigkeit von der Differenz (n₁-n₂) der Drehzahlen (n₁, n₂) zumindest eine Ventilanordnung (60, 61; 62, 63) umschaltet.

7. Hydrostatischer Fahrantrieb nach einem der Ansprüche 3 bis 6,
**dadurch gekennzeichnet,**
**daß** eine Ventilanordnung (60, 61) ein erstes Schaltventil (60), das den ersten Anschluß (25) des dritten Hydromotors (23) wahlweise mit dem ersten Anschluß (27) des vierten Hydromotors (24) oder mit der ersten Arbeitsleitung (5) verbindet, und ein zweites Schaltventil (61) umfaßt, das den zweiten Anschluß (30) des dritten Hydromotors (23) wahlweise mit dem zweiten Anschluß (28) des vierten Hydromotors (24) oder mit der zweiten Arbeitsleitung (13) verbindet.

8. Hydrostatischer Fahrantrieb nach einem der Ansprüche 3 bis 7,
**dadurch gekennzeichnet,**
**daß** eine Ventilanordnung (62, 63) ein drittes Schaltventil (62), das den zweiten Anschluß (28) des vierten Hydromotors (24) wahlweise mit dem zweiten Anschluß (30) des dritten Hydromotors (23) oder mit der ersten Arbeitsleitung (5) verbindet, und ein viertes Schaltventil (63) umfaßt, das den ersten Anschluß (27) des vierten Hydromotors (24) wahlweise mit dem ersten Anschluß (25) des dritten Hydromotors (23) oder mit der zweiten Arbeitsleitung (13) verbindet.

9. Hydrostatischer Fahrantrieb nach einem der Ansprüche 1 oder 8,
**dadurch gekennzeichnet,**
**daß** der Nebenkreislauf (3) mit einer Speiseleitung (33) zum Einspeisen von Hydraulikfluid verbunden ist.

10. Hydrostatischer Fahrantrieb nach einem der Ansprüche 1 bis 3,
**dadurch gekennzeichnet,**
**daß** der Nebenkreislauf (3) über ein Schaltventil (50) mit einer Niederdruck führenden Arbeitsleitung (5; 13) des Arbeitskreislaufs (2) zum Einspeisen von Hydraulikfluid verbindbar ist.

11. Hydrostatischer Fahrantrieb nach Anspruch 9 oder 10,
**dadurch gekennzeichnet,**
**daß** eine Niederdruck führende Nebenleitung (26; 29) des Nebenkreislaufs (3) über ein Rückschlagventil (39; 40) mit der Speiseleitung (33) oder dem Schaltventil (50) verbunden ist.

12. Hydrostatischer Fahrantrieb nach einem der Ansprüche 1 bis 11,
**dadurch gekennzeichnet,**
**daß** der erste Hydromotor (8) und der dritte Hydromotor (23) an einer ersten gemeinsamen Abtriebswelle (15) angeordnet sind und
**daß** der zweite Hydromotor (10) und der vierte Hydromotor (24) an einer zweiten gemeinsamen Abtriebswelle (18) angeordnet sind.

13. Hydrostatischer Fahrantrieb nach Anspruch 1,
**dadurch gekennzeichnet,**
**daß** ein mit der Hydropumpe (4) über den hydraulischen Arbeitskreislauf (2) verbundener fünfter Hydromotor (72), der einen dritten Antriebsstrang (71) antreibt, und ein mit dem dritten Antriebsstrang (71) gekoppelter sechster Hydromotor (73) vorgesehen sind,
wobei der sechste Hydromotor (73) mit dem dritten Hydromotor (23) und dem vierten Hydromotor (24) über den hydraulischen Nebenkreislauf (3) verbindbar ist.

14. Hydrostatischer Fahrantrieb nach Anspruch 13,
**dadurch gekennzeichnet,**
**daß** ein erster Anschluß (76) des sechsten Hydromotors (73) über eine erste Nebenleitung (26) des Nebenkreislaufs (3) mit einem ersten Anschluß (25) des dritten Hydromotors (23) und einem ersten Anschluß (27) des vierten Hydromotors (24) verbunden ist und,
**daß** ein zweiter Anschluß (77) des sechsten Hydromotors (73) über eine zweite Nebenleitung (29) des Nebenkreislaufs (3) mit einem zweiten Anschluß (30) des dritten Hydromotors (23) und einem zweiten Anschluß (27) des vierten Hydromotors (24) verbunden ist.

15. Hydrostatischer Fahrantrieb nach Anspruch 13 oder 14,
**dadurch gekennzeichnet,**
**daß** von dem dritten Hydromotor (23), dem vierten Hydromotor (24) und dem sechsten Hydromotor (73) ein Hydromotor (24) ein Schluckvolumen hat, das der Summe der Schluckvolumina der beiden anderen Hydromotoren. (23, 73) entspricht.

16. Hydrostatischer Fahrantrieb nach Anspruch 2 oder 14,
**dadurch gekennzeichnet,**
**daß** die erste Nebenleitung (26) mit der zweiten Nebenleitung (29) des Nebenkreislaufs (3) über eine Drossel (41) verbunden ist.

17. Hydrostatischer Fahrantrieb nach Anspruch 13,
**dadurch gekennzeichnet,**
**daß** ein mit der Hydropumpe (4) über den hydraulischen Arbeitskreislauf (2) verbundener siebter Hydromotor (81), der einen vierten Antriebsstrang (80) antreibt, und ein mit dem vierten Antriebsstrang (80) gekoppelter achter Hydromotor (82) vorgesehen sind.

18. Hydrostatischer Fahrantrieb nach Anspruch 17,
**dadurch gekennzeichnet,**
**daß** der dritte Hydromotor (23), der vierte Hydromotor (24), der sechste Hydromotor (73) und der achte Hydromotor (82) seriell über einen einzigen Nebenkreislauf (3) miteinander verbunden sind.

19. Hydrostatischer Fahrantrieb nach Anspruch 18,
**dadurch gekennzeichnet,**
**daß** ein erster Anschluß (25) des dritten Hydromotors (23) mit einem ersten Anschluß (27) des vierten Hydromotors (24) verbunden ist,
**daß** ein zweiter Anschluß (28) des vierten Hydromotors (24) mit einem ersten Anschluß (76) des sechsten Hydromotors (73) verbunden ist,
**daß** ein zweiter Anschluß (77) des sechsten Hydromotors (73) mit einem ersten Anschluß (86) des achten Hydromotors (82) verbunden ist, und
**daß** ein zweiter Anschluß (87) des achten Hydromotors (82) mit einem zweiten Anschluß (30) des dritten Hydromotors (23) verbunden ist.

20. Hydrostatischer Fahrantrieb nach Anspruch 17,
**dadurch gekennzeichnet,**
**daß** der dritte Hydromotor (23) mit dem vierten Hydromotor (24) über einen ersten Nebenkreislauf (3) verbunden ist, und
**daß** der sechste Hydromotor (73) mit dem achten Hydromotor (82) über einen zweiten Nebenkreislauf (78) verbunden ist.

## Claims

1. Hydrostatic drive (1) having
at least one hydraulic pump (4),
a first hydraulic motor (8) which is connected to the hydraulic pump (4) via a hydraulic working circuit (2) and drives a first drive train (17),
a second hydraulic motor (10) which is connected via the hydraulic working circuit (2) to the hydraulic pump (4) and drives a second drive train (19),
a third hydraulic motor (23) coupled to the first drive train (17) and
a fourth hydraulic motor (24) coupled to the second drive train (19), the fourth hydraulic motor (24) being connectable to the third hydraulic motor (23) via a hydraulic secondary circuit (3) independent of the working circuit (2), and
at least when a slip occurs at one of the drive trains (17, 19), the third hydraulic motor (23) and the fourth hydraulic motor (24) being arranged in series in the secondary circuit (3), **characterised in that** even if a slip occurs at one of the drive trains (17, 19), a first connection (7) of the first hydraulic motor (8) and a first connection (9) of the second hydraulic motor (10) are connected via a first working line (5) of the working circuit (2) to a first connection (6) of the hydraulic pump (4) and a second connection (11) of the first hydraulic motor (8) and a second connection (12) of the second hydraulic motor (10) are connected via a second working line (13) of the working circuit (2) to a second connection (14) of the hydraulic pump (6).

2. Hydrostatic drive according to Claim 1, **characterised in that** a first connection (25) of the third hydraulic motor (23) is connected via a first secondary line (26) of the secondary circuit (3) to the first connection (27) of the fourth hydraulic motor (24), and **in that** a second connection (28) of the fourth hydraulic motor (24) is connected via a second secondary line (26) of the secondary circuit (3) to a second connection (30) of the third hydraulic motor (23).

3. Hydrostatic drive according to Claim 1, **characterised in that** a valve arrangement (60, 61) is provided, via which a first connection (25) of the third hydraulic motor (23) is selectively connectable to a first connection (27) of the fourth hydraulic motor (24) or to a first working line (5) of the working circuit (2) and a second connection (30) of the third hydraulic motor (23) is selectively connectable to a second connection (28) of the fourth hydraulic motor (24) or to a second working line (13) of the working circuit (2).

4. Hydrostatic drive according to Claim 1 or 3, **characterised in that** a valve arrangement (62, 63) is provided, via which the second connection (28) of the fourth hydraulic motor (24) is selectively connectable to the second connection (30) of the third hydraulic motor (23) or to the first working line (5) and the first connection (27) of the fourth hydraulic motor (24) is selectively connectable to the first connection (25) of the third hydraulic motor (23) or to the second working line (13).

5. Hydrostatic drive according to Claim 3 or 4, **characterised in that** at least one valve arrangement (60, 61; 62, 63) can be switched over by a control signal which is generated as a function of whether a slip occurs at one of the drive trains (17, 19).

6. Hydrostatic drive according to Claim 5, **characterised in that** a first speed sensor (70) is arranged on the first drive train (17) and a second speed sensor (71) is arranged on the second drive train (19), and **in that** a control device (69) is provided which compares the speeds (n₁, n₂) determined by the speed sensors (70, 71) with each other, and switches over at least one valve arrangement (60, 61; 62, 63) as a function of the difference (n₁-n₂) of the speeds (n₁, n₂).

7. Hydrostatic drive according to one of Claims 3 to 6, **characterised in that** a valve arrangement (60, 61) comprises a first switching valve (60) which selectively connects the first connection (25) of the third hydraulic motor (23) to the first connection (27) of the fourth hydraulic motor (24) or to the first working line (5), and a second switching valve (61) which selectively connects the second connection (30) of the third hydraulic motor (23) to the second connection (28) of the fourth hydraulic motor (24) or to the second working line (13).

8. Hydrostatic drive according to one of Claims 3 to 7, **characterised in that** a valve arrangement (62, 63) comprises a third switching valve (62) which selectively connects the second connection (28) of the fourth hydraulic motor (24) to the second connection (30) of the third hydraulic motor (23) or to the first working line (5), and a fourth switching valve (63) which selectively connects the first connection (27) of the fourth hydraulic motor (24) to the first connection (25) of the third hydraulic motor (23) or to the second working line (13).

9. Hydrostatic drive according to one of Claims 1 to 8, **characterised in that** the secondary circuit (3) is connected to a feed line (33) for feeding hydraulic fluid.

10. Hydrostatic drive according to one of Claims 1 to 3, **characterised in that** the secondary circuit (3) is connectable via a switching valve (50) to a low pressure-carrying working line (5; 13) of the working circuit (2) for feeding hydraulic fluid.

11. Hydrostatic drive according to Claim 9 or 10, **characterised in that** a low pressure-carrying secondary line (26; 29) of the secondary circuit (3) is connected via a nonreturn valve (39; 40) to the feed line (33) or the switching valve (50).

12. Hydrostatic drive according to one of Claims 1 to 11, **characterised in that** the first hydraulic motor (8) and the third hydraulic motor (23) are arranged on a first common output shaft (15) and **in that** the second hydraulic motor (10) and the fourth hydraulic motor (24) are arranged on a second common output shaft (18).

13. Hydrostatic drive according to Claim 1, **characterised in that** a fifth hydraulic motor (72) which is connected to the hydraulic pump (4) via the hydraulic working circuit (2) and drives a third drive train (71) is provided, and a sixth hydraulic motor (73) coupled to the third drive train (71) is provided, the sixth hydraulic motor (73) being connectable to the third hydraulic motor (23) and the fourth hydraulic motor (24) via the hydraulic secondary circuit (3).

14. Hydrostatic drive according to Claim 13, **characterised in that** a first connection (76) of the sixth hydraulic motor (73) is connected via a first secondary line (26) of the secondary circuit (3) to a first connection (25) of the third hydraulic motor (23) and a first connection (27) of the fourth hydraulic motor (24), and **in that** a second connection (77) of the sixth hydraulic motor (73) is connected via a second secondary line (29) of the secondary circuit (3) to a second connection (30) of the third hydraulic motor (23) and a second connection (27) of the fourth hydraulic motor (24).

15. Hydrostatic drive according to Claim 13 or 14, **characterised in that**, of the third hydraulic motor (23), the fourth hydraulic motor (24) and the sixth hydraulic motor (73), a hydraulic motor (24) has an absorbing volume which corresponds to the sum of the absorbing volumes of the other two hydraulic motors (23, 73).

16. Hydrostatic drive according to Claim 2 or 14, **characterised in that** the first secondary line (26) is connected to the second secondary line (29) of the secondary circuit (3) via a throttle (41).

17. Hydrostatic drive according to Claim 13, **characterised in that** a seventh hydraulic motor (81) which is connected to the hydraulic pump (4) via the hydraulic working circuit (2) and drives a fourth drive train (80) is provided, and an eighth hydraulic motor (82) coupled to the fourth drive train (80) is provided.

18. Hydrostatic drive according to Claim 17, **characterised in that** the third hydraulic motor (23), the fourth hydraulic motor (24), the sixth hydraulic motor (73) and the eighth hydraulic motor (82) are connected to one another in series via a single secondary circuit (3).

19. Hydrostatic drive according to Claim 18, **characterised in that** a first connection (25) of the third hydraulic motor (23) is connected to a first connection (27) of the fourth hydraulic motor (24), **in that** a second connection (28) of the fourth hydraulic motor (24) is connected to a first connection (76) of the sixth hydraulic motor (73), **in that** a second connection (77) of the sixth hydraulic motor (73) is connected to a first connection (86) of the eighth hydraulic motor (82), and **in that** a second connection (87) of the eighth hydraulic motor (82) is connected to a second connection (30) of the third hydraulic motor (23).

20. Hydrostatic drive according to Claim 17, **characterised in that** the third hydraulic motor (23) is connected to the fourth hydraulic motor (24) via a first secondary circuit (3), and **in that** the sixth hydraulic motor (73) is connected to the eighth hydraulic motor (82) via a second secondary circuit (78).

## Revendications

1. Système d'entraînement hydrostatique (1) comprenant
au moins une pompe hydraulique (4),
un premier moteur hydraulique (8) relié à la pompe hydraulique (4) par l'intermédiaire d'un circuit hydraulique de travail (2), et entraînant un premier brin menant (17),
un deuxième moteur hydraulique (10) relié à la pompe hydraulique (4) par l'intermédiaire du circuit hydraulique de travail (2), et entraînant un deuxième brin menant (19),
un troisième moteur hydraulique (23) accouplé au premier brin menant (17), et
un quatrième moteur hydraulique (24) accouplé au deuxième brin menant (19), ledit quatrième moteur hydraulique (24) pouvant être relié au troisième moteur hydraulique (23) par l'intermédiaire d'un circuit hydraulique auxiliaire (3) indépendant du circuit de travail (2), et,
au moins lorsqu'un patinage survient sur l'un des brins menants (17, 19), le troisième moteur hydraulique (23) et le quatrième moteur hydraulique (24) sont agencés en série dans le circuit auxiliaire (3), **caractérisé par le fait**
**que**, également lorsqu'un patinage survient sur l'un des brins menants (17, 19), un premier raccord (7) du premier moteur hydraulique (8) et un premier raccord (9) du deuxième moteur hydraulique (10) sont reliés, par l'intermédiaire d'un premier conduit de travail (5) du circuit de travail (2), à un premier raccord (6) de la pompe hydraulique (4) ; et un second raccord (11) du premier moteur hydraulique (8) et un second raccord (12) du deuxième moteur hydraulique (10) sont reliés, par l'intermédiaire d'un second conduit de travail (13) dudit circuit de travail (2), à un second raccord (14) de ladite pompe hydraulique (6).

2. Système d'entraînement hydrostatique selon la revendication 1,
**caractérisé par le fait**
**qu'**un premier raccord (25) du troisième moteur hydraulique (23) est relié, par l'intermédiaire d'un premier conduit auxiliaire (26) du circuit auxiliaire (3), au premier raccord (27) du quatrième moteur hydraulique (24) ; et
**qu'**un second raccord (28) du quatrième moteur hydraulique (24) est relié, par l'intermédiaire d'un second conduit auxiliaire (26) du circuit auxiliaire (3), à un second raccord (30) du troisième moteur hydraulique (23).

3. Système d'entraînement hydrostatique selon la revendication 1,
**caractérisé par le fait**
**qu'**il est prévu un ensemble de distribution (60, 61) par l'intermédiaire duquel un premier raccord (25) du troisième moteur hydraulique (23) peut être sélectivement relié à un premier raccord (27) du quatrième moteur hydraulique (24), ou à un premier conduit de travail (5) du circuit de travail (2) ; et un second raccord (30) du troisième moteur hydraulique (23) peut être sélectivement relié à un second raccord (28) du quatrième moteur hydraulique (24), ou à un second conduit de travail (13) dudit circuit de travail (2).

4. Système d'entraînement hydrostatique selon la revendication 1 ou 3,
**caractérisé par le fait**
**qu'**il est prévu un ensemble de distribution (62, 63) par l'intermédiaire duquel le second raccord (28) du quatrième moteur hydraulique (24) peut être sélectivement relié au second raccord (30) du troisième moteur hydraulique (23), ou au premier conduit de travail (5) ; et
le premier raccord (27) du quatrième moteur hydraulique (24) peut être sélectivement relié au premier raccord (25) du troisième moteur hydraulique (23), ou au second conduit de travail (13).

5. Système d'entraînement hydrostatique selon la revendication 3 ou 4,
**caractérisé par le fait**
**qu'**au moins un ensemble de distribution (60, 61 ; 62, 63) est commutable par un signal de commande engendré en fonction de l'occurrence d'un patinage sur l'un des brins menants (17, 19).

6. Système d'entraînement hydrostatique selon la revendication 5,
**caractérisé par le fait**
**qu'**un premier capteur (70) de vitesse angulaire est installé sur le premier brin menant (17), et un second capteur (71) de vitesse angulaire est installé sur le deuxième brin menant (19) ; et
**qu'**il est prévu un dispositif de commande (69) qui compare l'une à l'autre les vitesses angulaires (n₁, n₂) établies par les capteurs (70, 71) de vitesse angulaire, et commute au moins un ensemble de distribution (60, 61 ; 62, 63) en fonction de la différence (n₁ - n₂) entre les vitesses angulaires (n₁, n₂).

7. Système d'entraînement hydrostatique selon l'une des revendications 3 à 6,
**caractérisé par le fait**
**qu'**un ensemble de distribution (60, 61) comprend un premier distributeur (60) qui relie sélectivement le premier raccord (25) du troisième moteur hydraulique (23) au premier raccord (27) du quatrième moteur hydraulique (24), ou au premier conduit de travail (5) ; et un deuxième distributeur (61) qui relie sélectivement le second raccord (30) du troisième moteur hydraulique (23) au second raccord (28) du quatrième moteur hydraulique (24), ou au second conduit de travail (13).

8. Système d'entraînement hydrostatique selon l'une des revendications 3 à 7,
**caractérisé par le fait**
**qu'**un ensemble de distribution (62, 63) comprend un troisième distributeur (62) qui relie sélectivement le second raccord (28) du quatrième moteur hydraulique (24) au second raccord (30) du troisième moteur hydraulique (23), ou au premier conduit de travail (5) ; et un quatrième distributeur (63) qui relie sélectivement le premier raccord (27) du quatrième moteur hydraulique (24) au premier raccord (25) du troisième moteur hydraulique (23), ou au second conduit de travail (13).

9. Système d'entraînement hydrostatique selon l'une des revendications 1 ou 8,
**caractérisé par le fait**
**que** le circuit auxiliaire (3) est raccordé à un conduit d'alimentation (33) affecté à l'alimentation en fluide hydraulique.

10. Système d'entraînement hydrostatique selon l'une des revendications 1 à 3,
**caractérisé par le fait**
**que** le circuit auxiliaire (3) peut être raccordé, par l'intermédiaire d'un distributeur (50), à un conduit de travail (5 ; 13) du circuit de travail (2), qui achemine une basse pression, en vue de l'alimentation en fluide hydraulique.

11. Système d'entraînement hydrostatique selon la revendication 9 ou 10,
**caractérisé par le fait**
**qu'**un conduit auxiliaire (26 ; 29) du circuit auxiliaire (3), qui achemine une basse pression, est raccordé au conduit d'alimentation (33) ou au distributeur (50) par l'intermédiaire d'un clapet antiretour (39 ; 40).

12. Système d'entraînement hydrostatique selon l'une des revendications 1 à 11,
**caractérisé par le fait**
**que** le premier moteur hydraulique (8) et le troisième moteur hydraulique (23) sont disposés sur un premier arbre commun de sortie (15) ; et
**que** le deuxième moteur hydraulique (10) et le quatrième moteur hydraulique (24) sont disposés sur un second arbre commun de sortie (18).

13. Système d'entraînement hydrostatique selon la revendication 1,
**caractérisé**
**par** la présence d'un cinquième moteur hydraulique (72) relié à la pompe hydraulique (4) par l'intermédiaire du circuit hydraulique de travail (2), et entraînant un troisième brin menant (71) ; et d'un sixième moteur hydraulique (73) accouplé audit troisième brin menant (71),
ledit sixième moteur hydraulique (73) pouvant être raccordé au troisième moteur hydraulique (23) et au quatrième moteur hydraulique (24), par l'intermédiaire du circuit hydraulique auxiliaire (3).

14. Système d'entraînement hydrostatique selon la revendication 13,
**caractérisé par le fait**
**qu'**un premier raccord (76) du sixième moteur hydraulique (73) est relié, par l'intermédiaire d'un premier conduit auxiliaire (26) du circuit auxiliaire (3), à un premier raccord (25) du troisième moteur hydraulique (23) et à un premier raccord (27) du quatrième moteur hydraulique (24) ; et
**qu'**un second raccord (77) du sixième moteur hydraulique (73) est relié, par l'intermédiaire d'un second conduit auxiliaire (29) du circuit auxiliaire (3), à un second raccord (30) du troisième moteur hydraulique (23) et à un second raccord (27) du quatrième moteur hydraulique (24).

15. Système d'entraînement hydrostatique selon la revendication 13 ou 14,
**caractérisé par le fait**
**que**, parmi les troisième moteur hydraulique (23), quatrième moteur hydraulique (24) et sixième moteur hydraulique (73), un moteur hydraulique (24) présente un volume d'aspiration correspondant à la somme des volumes d'aspiration des deux autres moteurs hydrauliques (23, 73).

16. Système d'entraînement hydrostatique selon la revendication 2 ou 14,
**caractérisé par le fait**
**que** le premier conduit auxiliaire (26) est raccordé au second conduit auxiliaire (29) du circuit auxiliaire (3) par l'intermédiaire d'un étranglement (41).

17. Système d'entraînement hydrostatique selon la revendication 13,
**caractérisé**
**par** la présence d'un septième moteur hydraulique (81) relié à la pompe hydraulique (4) par l'intermédiaire du circuit hydraulique de travail (2), et entraînant un quatrième brin menant (80) ; et d'un huitième moteur hydraulique (82) accouplé audit quatrième brin menant (80).

18. Système d'entraînement hydrostatique selon la revendication 17,
**caractérisé par le fait**
**que** le troisième moteur hydraulique (23), le quatrième moteur hydraulique (24), le sixième moteur hydraulique (73) et le huitième moteur hydraulique (82) sont reliés les uns aux autres, en série, par l'intermédiaire d'un unique circuit auxiliaire (3).

19. Système d'entraînement hydrostatique selon la revendication 18,
**caractérisé par le fait**
**qu'**un premier raccord (25) du troisième moteur hydraulique (23) est relié à un premier raccord (27) du quatrième moteur hydraulique (24) ;
**qu'**un second raccord (28) du quatrième moteur hydraulique (24) est relié à un premier raccord (76) du sixième moteur hydraulique (73) ;
**qu'**un second raccord (77) du sixième moteur hydraulique (73) est relié à un premier raccord (86) du huitième moteur hydraulique (82) ; et
**qu'**un second raccord (87) du huitième moteur hydraulique (82) est relié à un second raccord (30) du troisième moteur hydraulique (23).

20. Système d'entraînement hydrostatique selon la revendication 17,
**caractérisé par le fait**
**que** le troisième moteur hydraulique (23) est relié au quatrième moteur hydraulique (24) par l'intermédiaire d'un premier circuit auxiliaire (3) ; et
**que** le sixième moteur hydraulique (73) est relié au huitième moteur hydraulique (82) par l'intermédiaire d'un second circuit auxiliaire (78).
